# EUROPÄISCHE PATENTSCHRIFT

(11) **EP 2 216 536 B1**
(45) Veröffentlichungstag und Bekanntmachung des Hinweises auf die Patenterteilung: **03.08.2016**
(21) Anmeldenummer: 09176024.9
(22) Anmeldetag: 16.11.2009
(51) Int. Cl.: F02M 26/10, F02M 26/40, F16K 15/16

(54) **Rückschlagventil**
Return valve
Clapet anti-retour

(30) Priorität: 05.02.2009 DE 102009007609
(43) Veröffentlichungstag der Anmeldung: 11.08.2010
(73) Patentinhaber: Pierburg GmbH, 41460 Neuss (DE)
(72) Erfinder: Hüsges, Hans-Jürgen, 47877, Willich (DE); Kühnel, Hans-Ulrich, 41239, Mönchengladbach (DE)
(74) Vertreter: Patentanwälte ter Smitten Eberlein Rütten Partnerschaftsgesellschaft

(56) Entgegenhaltungen:
- GB-A- 190 618 175
- US-A- 1 697 004
- US-A- 2 599 499
- US-A- 5 373 867

## Beschreibung

Die Erfindung betrifft ein Rückschlagventil für gasführende Leitungen im Bereich von Brennkraftmaschinen mit einem Gehäuse, das einen Ventilsitz mit einer Ventilöffnung, ein Ventilplattenelement und ein Ventilanschlagelement aufweist, wobei das Ventilplattenelement als Blattfederelement ausgebildet ist, wobei das Ventilplattenelement und das Ventilanschlagelement als einteiliges, als Stanzbiegeteil ausgeführtes Ventilverschlussorgan für sämtliche Ventilsitze ausgeführt sind, derart, dass in einer geöffneten Position das Ventilplattenelement gegen das Ventilanschlagelement anliegt, wobei ein Übergangsabschnitt entlang der Länge des Stanzbiegeteils gesehen zwischen dem Ventilplattenelement und dem Ventilanschlagelement angeordnet ist.

Aus der DE 199 53 198 A1 ist ein derartiges Rückschlagventil bekannt. Diese Art von Rückschlagventilen wird insbesondere im Bereich der Abgasrückführung eingesetzt, wobei der Druck in der Ladeluftleitung größer als der Druck in der Abgasrückführleitung sein kann und dementsprechend ein Eindringen von Ladeluft in die Abgasrückführleitung verhindert werden soll. Trotz der geringen Bauteileanzahl ist der Montageaufwand vor allem bei mehrflutigen derartigen Rückschlagventilen hoch.

Die US 2006/0219300 A1 beschreibt ebenfalls ein mehrflutiges Rückschlagventil. Hieraus ist es bekannt, ein Ventilverschlussorgan mit mehreren Ventilplattenelementen auszuführen. Aus einer anderen Ausführungsform ist es dabei bekannt, einzelne Ventilplattenelemente mit einem Ventilanschlagelement zu versehen.

Die US 2,599,499 beschreibt ebenfalls ein Rückschlagventil Ventil, das jedoch kompliziert im Aufbau und damit in der Montage ist. Ein gattungsgemäßes Rückschlagventil ist aus der US 1,697,004 bekannt. Jedoch ist auch dieses Rückschlagventil vor dem Hintergrund der Herstellung und der Montage nicht geeignet, in einer Serienproduktion eingesetzt zu werden.

Daher liegt der Erfindung die Aufgabe zugrunde, ein Rückschlagventil zu verschaffen, das einen wesentlich geringeren Montageaufwand benötigt und dementsprechend kostengünstiger in der Herstellung ist.

Diese Aufgabe wird bei einem gattungsgemäßen Rückschlagventil dadurch gelöst, dass das Gehäuse eine Klemmnut besitzt, in der das Ventilverschlussorgan mit dem Übergangsabschnitt form- und kraftschlüssig gelagert ist.

Auf diese Weise wird eine besonders einfache und damit kostengünstige Montage des Rückschlagventils gewährleistet.

In vorteilhafter Weise kann das Ventilverschlussorgan eine Elastomerbeschichtung aufweisen. Darüber hinaus kann auch zumindest der Bereich des Ventilsitzes des Gehäuses eine thermisch belastbare Elastomerbeschichtung aufweisen, um eine gute Abdichtung im geschlossenen Zustand zu gewährleisten.

Um die Montage noch weiter zu vereinfachen, besitzt das Gehäuse eine Klemmnut, in der das Ventilverschlussorgan mit einem Übergangsabschnitt form- und kraftschlüssig gelagert ist.

Darüber hinaus ist es auch möglich, das Ventilverschlussorgan über das Ventilanschlagelement kraftschlüssig, zum Beispiel durch eine Niet-, Schraubverbindung, etc. mit dem Gehäuse zu verbinden. In diesem Fall ist es besonders vorteilhaft, wenn das Gehäuse Anschlusszapfen aufweist.

Auch kann das Gehäuse ein umlaufendes Abdichtorgan aufweisen, das einerseits eine Dichtwirkung zwischen einer gasführenden Leitung und dem Rückschlagventil gewährleistet und andererseits das Rückschlagventil dämpfend in der gasführenden Leitung lagert. Auch ist es möglich, dass das Gehäuse mehrere Ventilöffnungen aufweist.

Ein Ausführungsbeispiel der Erfindung ist in der Zeichnung dargestellt und wird nachfolgend beschrieben.

Hierin zeigt:
Figur 1: eine perspektivische Ansicht eines vierflutigen Rückschlagventils,
Figur 2: eine Schnittansicht des Rückschlagventils aus Figur 1.

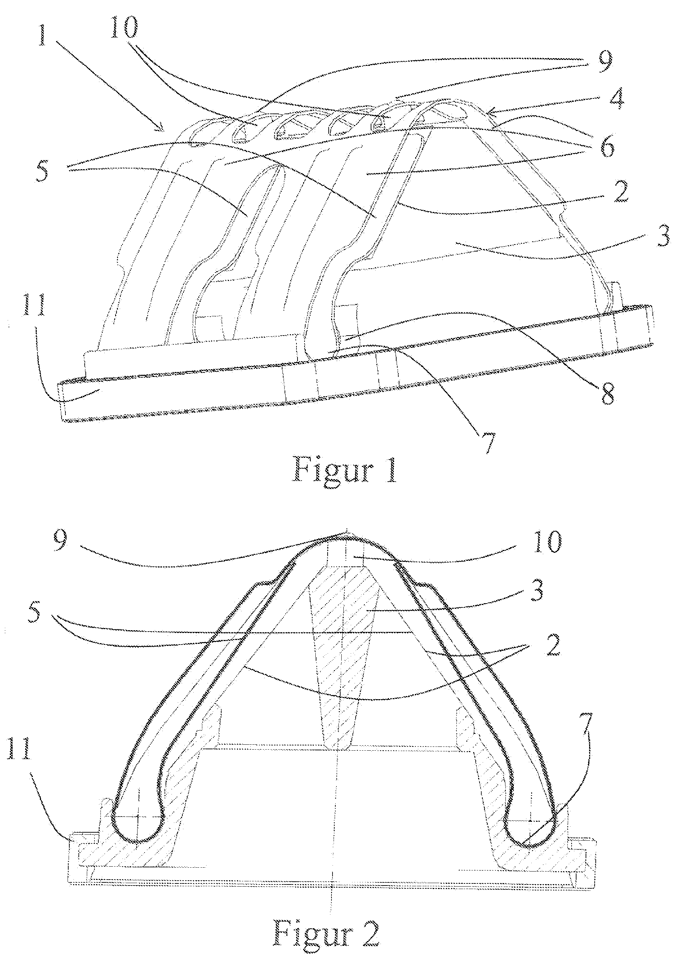

Figur 1 zeigt in perspektivischer Ansicht ein erfindungsgemäßes Rückschlagventil 1, das als vierflutiges Rückschlagventil, also mit vier Ventilöffnungen 2 ausgebildet ist. Das Rückschlagventil 1 ist im vorliegenden Fall in einer nicht näher dargestellten Abgasrückführleitung eingebaut und soll gewährleisten, dass wenn der Ladeluftdruck größer ist als der mittlere Abgasdruck die Abgasrückführleitung schnell geschlossen wird, um zu verhindern, dass Ladeluft in die Abgasrückführleitung gelangt. Hierzu können, wenn gewünscht, einzelne Abgasrückführleitungen natürlich mit einzelnen Ladeluftleitungen zusammenwirken.

Das erfindungsgemäße Rückschlagventil besitzt ein Gehäuse 3, das im vorliegenden Fall vier Ventilöffnungen 2 aufweist, die jeweils einen Ventilsitz bilden. Diese Ventilöffnungen sind durch ein Ventilverschlussorgan 4 verschließbar. Das Ventilverschlussorgan 4 ist erfindungsgemäß als Stanzbiegeteil ausgeführt und umfasst sowohl Ventilplattenelemente 5, die die jeweiligen Ventilöffnungen 2 bei einem zu hohen Ladeluftdruck verschließen können, als auch Ventilanschlagelemente 6, die den Ausschlag der Ventilplattenelemente 5 begrenzen. Das Ventilverschlussorgan 4 ist mit einem Übergangsabschnitt 7 in einer Klemmnut 8 gelagert und zudem noch über Schrauben 9 mit Anschlusszapfen 10 des Gehäuses 3 kraftschlüssig verbunden. Um nun eine gute Dichtwirkung des Rückschlagventils 1 zwischen der Abgasrückführleitung und dem Gehäuse 3 zu erzielen, und des Weiteren das Gehäuse 3 dämpfend in der Abgasrückführleitung zu lagern, ist ein umlaufendes Abdichtorgan 11 vorgesehen. Darüberhinaus kann das Gehäuse 3 beispielsweise aus Aluminium oder einem Duroplast hergestellt sein, wobei der Bereich der Ventilsitze mit einem thermisch belastbaren Elastomer beschichtet ist, um eine optimale Abdichtung zu gewährleisten.

Figur 2 zeigt nun noch einmal in einer Schnittansicht das erfindungsgemäße Rückschlagventil 1. Besonders gut zu erkennen ist hierbei die Befestigung des Ventilverschlussorgans 4 über Schraube 9 in den Anschlusszapfen 10. Das Rückschlagventil 1 ist hier in einer geöffneten Position, also in einer Position in der das Ventilplattenelement 5 von der Ventilöffnung 2 und dem damit verbundenen Ventilsitz abgehoben ist und gegen das Ventilanschlagelement 6 anliegt.

## Patentansprüche

1. Rückschlagventil (1) für gasführende Leitungen im Bereich von Brennkraftmaschinen mit einem Gehäuse (3), das mindestens einen Ventilsitz mit einer Ventilöffnung (2), ein Ventilplattenelement (5) und ein Ventilanschlagelement (6) aufweist, wobei das Ventilplattenelement (5) als Blattfederelement ausgebildet ist, wobei das Ventilplattenelement (5) und das Ventilanschlagelement (6) als einteiliges, als Stanzbiegeteil ausgeführtes Ventilverschlussorgan (4) für sämtliche Ventilsitze ausgeführt sind, derart, dass in einer geöffneten Position das Ventilplattenelement (5) gegen das Ventilanschlagelement (6) anliegt, wobei ein Übergangsabschnitt (7) entlang der Länge des Stanzbiegeteils gesehen zwischen dem Ventilplattenelement (5) und dem Ventilanschlagelement (6) angeordnet ist, **dadurch gekennzeichnet, dass** das Gehäuse (3) eine Klemmnut (8) besitzt, in der das Ventilverschlussorgan (4) mit dem Übergangsabschnitt (7) form- und kraftschlüssig gelagert ist.

2. Rückschlagventil nach Anspruch 1, **dadurch gekennzeichnet, dass** das Ventilverschlussorgan (4) eine Elastomerbeschichtung aufweist.

3. Rückschlagventil nach einem der vorhergehenden Ansprüche, **dadurch gekennzeichnet, dass** zumindest der Bereich des Ventilsitzes des Gehäuses (3) eine thermisch belastbare Elastomerbeschichtung aufweist.

4. Rückschlagventil nach einem der vorhergehenden Ansprüche, **dadurch gekennzeichnet, dass** das Ventilverschlussorgan (4) über das Ventilanschlagelement kraftschlüssig, zum Beispiel durch eine Niet-, Schraubverbindung (9) mit dem Gehäuse (3) verbunden ist.

5. Rückschlagventil nach Anspruch 4, **dadurch gekennzeichnet, dass** das Gehäuse (3) Anschlusszapfen (10) aufweist.

6. Rückschlagventil nach einem der vorhergehenden Ansprüche, **dadurch gekennzeichnet, dass** das Gehäuse (3) ein umlaufendes Abdichtorgan (11) aufweist.

7. Rückschlagventil nach einem der vorhergehenden Ansprüche, **dadurch gekennzeichnet, dass** das Gehäuse (3) mehrere Ventilöffnungen (2) aufweist.

## Claims

1. Return valve (1) for gas-conducting conduits in the field of internal combustion engines, comprising a housing (3) with at least one valve seat having a valve opening (2), a valve plate element (5) and a valve stop element (6), wherein the valve plate element (5) being designed as a leaf spring element, wherein the valve plate element (5) and the valve stop element (6) are designed as an integral valve closure member (4), provided as a punched and bent part, for all valve seats such that in an open position, the valve plate element (5) contacts the valve stop element (6), wherein, seen in the length direction of the punched and bent part, a transition section (7) is arranged between the valve plate element (5) and the valve stop element (6), **characterized in that** the housing (3) has a clamping groove (8) in which the valve closure member (4) is supported in a form- and force-fitting manner by the transition section (7).

2. Return valve of claim 1, **characterized in that** the valve closure member (4) has an elastomer coating.

3. Return valve of one of the preceding claims, **characterized in that** at least the region of the valve seat of the housing (3) has an elastomer coating resistant to high thermal loads.

4. Return valve of one of the preceding claims, **characterized in that** the valve closure member (4) is connected with the housing (3) via the valve stop element in a force-fitting manner, in particular by a rivet or screw connection (9).

5. Return valve of claim 4, **characterized in that** the housing (3) has connection posts (10).

6. Return valve of one of the preceding claims, **characterized in that** the housing (3) has a circumferentially extending sealing member (11).

7. Return valve of one of the preceding claims, **characterized in that** the housing (3) has a plurality of valve openings (2).

## Revendications

1. Clapet anti-retour (1) pour des conduites conduisant les gaz, destiné à la domaine de moteurs à combustion interne, avec un carter (3) comprenant au moins une siège de clapet avec une orifice de clapet (2), un élément de plaque de clapet (5) et un élément de butée de clapet (6), ledit élément de plaque de clapet (5) étant réalisé sous forme d'un élément de ressort à lame, ledit élément de plaque de clapet (5) et ledit élément de butée de clapet (6) étant réalisés sous forme d'un organe de fermeture de clapet (4), fabriqué d'un seul tenant comme pièce obtenue par découpage et pliage, pour toutes les sièges de clapet, de sorte que, dans une position ouverte, ledit élément de plaque de clapet (5) reste sur ledit élément de butée de clapet (6), une section de transition (7) étant agencée entre ledit élément de plaque de clapet (5) et ledit élément de butée de clapet (6), vu dans la direction longitudinale de la pièce découpée et pliée, **caractérisé en ce que** le carter (3) comprend une rainure de serrage (8) dans laquelle ledit organe de fermeture de clapet (4) est supporté par forme et par adhérence par la section de transition (7).

2. Clapet anti-retour selon la revendication 1, **caractérisé en ce que** ledit organe de fermeture de clapet (4) comprend un revêtement en élastomère.

3. Clapet anti-retour selon l'une quelconque des revendications précédentes, **caractérisé en ce qu'**au moins la région de la siège de clapet du carter (3) comprend un revêtement en élastomère résistant à la charge thermique.

4. Clapet anti-retour selon l'une quelconque des revendications précédentes, **caractérisé en ce que** ledit organe de fermeture de clapet (4) est relié avec le carter (3) par adhérence, par exemple une liaison par rivets ou vis (9), par moyen dudit élément de butée de clapet (6).

5. Clapet anti-retour selon la revendication 4, **caractérisé en ce que** le carter (3) comprend des tenons de raccordement (10).

6. Clapet anti-retour selon l'une quelconque des revendications précédentes, **caractérisé en ce que** le carter (3) comprend un organe de scellement (11) circonférentiel.

7. Clapet anti-retour selon l'une quelconque des revendications précédentes, **caractérisé en ce que** le carter (3) comprend plusieurs orifices de clapet (2).
